# FASCICULE DE BREVET EUROPEEN

(11) **EP 1 530 928 B1**
(45) Date de publication et mention de la délivrance du brevet: **23.08.2006**
(21) Numéro de dépôt: 04292662.6
(22) Date de dépôt: 10.11.2004
(51) Int. Cl.: A47C 1/121

(54) **Siége à assise repliable présentant un faible encombrement à l'état replié**
Zusammenklappbarer Stuhl mit einem niedrigen Profil in der zusammengeklappten Position
Collapsible chair seat with a low profile in the collapsed position

(30) Priorité: 13.11.2003 FR 0313276
(43) Date de publication de la demande: 18.05.2005
(73) Titulaire: Chene, Richard, 92200 Neuilly-sur-Seine (FR); Delamour, Dominique, 78490 Les Mesnuls (FR); Rodi, Olivier, 78950 Gambais (FR); Asientos Esteban, S.L., 31012 Pamplona (Navarra) (ES)
(72) Inventeur: Chene, Richard, 92200 Neuilly sur Seine (FR); Delamour, Dominique, 78490 Les Mesnuls (FR); Rodi, Olivier, 78950 Gambais (FR)
(74) Mandataire: Sauvage, Renée

(56) Documents cités:
- EP-A- 0 614 634
- DE-A- 3 634 500
- FR-A- 2 779 621
- FR-A- 2 779 622
- US-A- 3 656 806

## Description

La présente invention a pour objet un siège à assise repliable, destiné notamment à des véhicules de transport en commun, et permettant aux passagers de s'asseoir hors des heures d'affluence. Un siège à assise repliable est connu de FR 2 779 621.

Plus précisément, l'invention concerne un siège à assise repliable du type comportant une coque, adaptée à être solidarisée à une structure fixe, qui dépend du véhicule, ladite coque étant équipée d'un dossier et offrant des points de montage pour l'axe de rotation d'une assise pivotante, laquelle comporte un bord proximal, proche dudit axe de rotation, et un bord distal opposé.

Dans les véhicules de transport en commun assurant les déplacements quotidiens des passagers, la capacité d'emport du véhicule doit être la plus élevée possible aux heures d'affluence et proposer le plus grand nombre possible de places assises aux heures creuses. A cet effet, il peut être prévu soit des strapontins, soit des sièges repliables.

Si les strapontins, qui ne sont constitués que d'une assise sensiblement plate et qui sont dépourvus de dossier, n'occupent que très peu de place à l'état replié, tel n'est pas le cas des sièges à assise repliable de l'art antérieur. En effet, les sièges repliables qui, eux, dès qu'ils offrent un certain confort, comportent un dossier et une assise élaborés, ont l'inconvénient d'occuper un volume excessif à l'état replié, ce qui réduit la capacité d'emport de passagers debout durant les heures d'affluence. Cela tient au fait que le dossier de tels sièges élaborés offre un appui lombaire convexe, que l'assise doit être sensiblement horizontale en position ouverte et que le plan d'appui dorsal doit former avec celui de l'assise ouverte un angle compris entre 100 et 115°. La convexité de l'appui lombaire limite la possibilité d'effacement du siège, en position repliée de l'assise, la région distale (par rapport à l'axe de rotation) de l'assise venant buter contre cette convexité.

L'invention a pour objectif de proposer un siège repliable, confortable et peu encombrant à l'état replié.

Pour ce faire, l'invention propose un siège à assise repliable du type précité et dont le dossier présente un appui scapulaire et un appui lombaire réalisés chacun sur un élément indépendant du dossier, l'élément présentant l'appui lombaire étant monté coulissant sur la coque du siège et étant asservi aux mouvements d'ouverture et de fermeture de l'assise, ou inversement, selon une relation telle que, en position fermée de l'assise, le bord distal de l'assise vient se loger sous ledit appui scapulaire. Ainsi, à la différence de l'art antérieur, en position repliée, l'assise ne vient plus buter contre la convexité de l'appui lombaire avec le bord distal de l'assise à l'écart et, en vis-à-vis, de l'appui lombaire, il pénètre dans l'espace libéré par l'appui lombaire entre lui-même et l'appui scapulaire, lors du coulissement dudit appui lombaire, avec une réduction correspondante d'encombrement.

Dans une forme d'exécution pratique de l'invention, ledit asservissement de l'élément présentant l'appui lombaire aux mouvements de l'assise est réalisé sous la forme d'un emboîtement entre une zone de contour de l'assise et une zone de contour de l'élément présentant l'appui lombaire, une partie formant levier, solidaire, d'une part, de l'axe de rotation de l'assise et, d'autre part, d'un point d'ancrage prévu sur l'élément présentant l'appui lombaire interdisant le déboîtement. Ainsi, en relevant l'assise, on entraîne en rotation l'axe de rotation de l'assise et, par suite, la partie formant levier qui en dépend, ce qui provoque le coulissement vers le bas de l'appui lombaire de façon à ce que, une fois l'assise en position fermée, le bord distal de l'assise vienne se loger sous ledit appui scapulaire. Avantageusement, l'assise présente une fosse ischiatique pour le confort de l'usager et, en position fermée du siège, la convexité de l'appui lombaire se retrouve face à la partie en creux de l'assise formant ladite fosse ischiatique et s'y loge.

Dans un mode de réalisation particulier de l'invention, l'élément présentant l'appui lombaire est muni d'ergots latéraux qui coopèrent chacun avec une glissière dépendant de ladite coque, la géométrie et l'orientation desdites glissières étant telles qu'elles contraignent ledit élément présentant l'appui lombaire à passer d'une position relevée, saillante, en position ouverte de l'assise à une position abaissée, reculée, en position fermée de l'assise. La coopération des ergots et des glissières assure le guidage de la partie supérieure de l'élément présentant l'appui lombaire lors de l'ouverture ou de la fermeture de l'assise. Le recul de l'élément présentant l'appui lombaire dans la coque, lors du passage en position fermée de l'assise, permet de diminuer encore l'encombrement du siège une fois replié.

Dans un mode de réalisation particulier de l'invention, en position ouverte de l'assise, le point d'ancrage de la partie formant levier sur l'élément présentant l'appui lombaire est situé plus haut que l'axe de rotation de l'assise alors que, en position fermée de l'assise, ce point d'ancrage est situé plus bas que ledit axe de rotation. Cette position du point d'ancrage au-dessous de l'axe de rotation de l'assise, lorsque cette dernière est en position fermée, évite que la partie inférieure de l'élément présentant l'appui lombaire déborde du bas du siège. L'espace situé sous le siège peut donc rester vacant, par exemple, pour y loger le passage de roues du véhicule ou d'une gaine de chauffage.

Dans le même objectif, la partie formant levier a une longueur inférieure à 13 cm, de préférence comprise entre 4 et 8 cm et, mieux, de l'ordre de 3 à 5 cm.

Dans un mode de réalisation préféré, pour réduire autant que possible la longueur de la partie formant levier, l'élément formant appui lombaire est grossièrement en forme de S, la convexité supérieure du S formant l'appui proprement dit et la concavité inférieure du S offrant un espace propre à recevoir la partie haute du fessier de l'usager, en position ouverte de l'assise.

Dans une forme d'exécution pratique de l'invention, et pour permettre au conducteur de décider de la position des sièges, le siège comporte des moyens motorisés actionnables à distance agissant directement ou indirectement sur l'assise et/ou sur l'élément présentant l'appui lombaire.

Dans un mode de réalisation particulier, les moyens motorisés agissent sur l'élément présentant l'appui lombaire et revêtent la forme d'une roue crantée calée sur un axe de rotation entraîné par un moteur et monté sur ladite coque, ladite roue crantée engrenant avec une crémaillère dépendant dudit élément. Une telle forme d'exécution peut permettre aussi bien de bloquer les sièges en position fermée qu'en position ouverte et c'est le mouvement de l'élément présentant l'appui lombaire qui entraîne la fermeture de l'assise.

Dans un mode de réalisation particulier, l'assise est munie de moyens de rappel la sollicitant vers sa position fermée, les moyens motorisés étant adaptés à exercer une prise relâchable bloquant l'assise en position fermée.

Dans une forme d'exécution particulière de l'invention, le plan de l'assise est légèrement incliné vers le bas, de son bord proximal, par rapport au dossier, vers son bord distal. Cette disposition permet d'ouvrir l'angle formé par le dos et les cuisses de l'usager en position assise, position plus confortable pour ce dernier, tout en rapprochant l'appui lombaire d'une ligne verticale, ce qui permet de rapprocher les rangées de sièges ainsi constitués.

L'invention sera davantage détaillée ci-après, par référence aux dessins annexés, dans lesquels :
- la figure 1 est une vue schématique, de profil, d'un siège à assise repliable selon l'invention, à l'état ouvert ;
- la figure 1a est un détail à plus grande échelle de la zone de contact entre l'assise et l'élément de dossier présentant l'appui lombaire ;
- la figure 2a est une représentation de ce que serait la configuration du siège de la figure 1 en position fermée en l'absence des moyens proposés par l'invention ;
- la figure 2b est une vue schématique, de profil, du siège de la figure 1 montrant la configuration qu'il occupe en position fermée, grâce aux moyens proposés par l'invention ;
- les figures 3a et 3b représentent, à plus grande échelle, la zone de jonction entre le dossier et l'assise du siège selon l'invention, dans une version motorisée, respectivement, en position ouverte et en position fermée.

Dans les dessins, les mêmes références numériques désignent des structures correspondantes dans chaque figure.

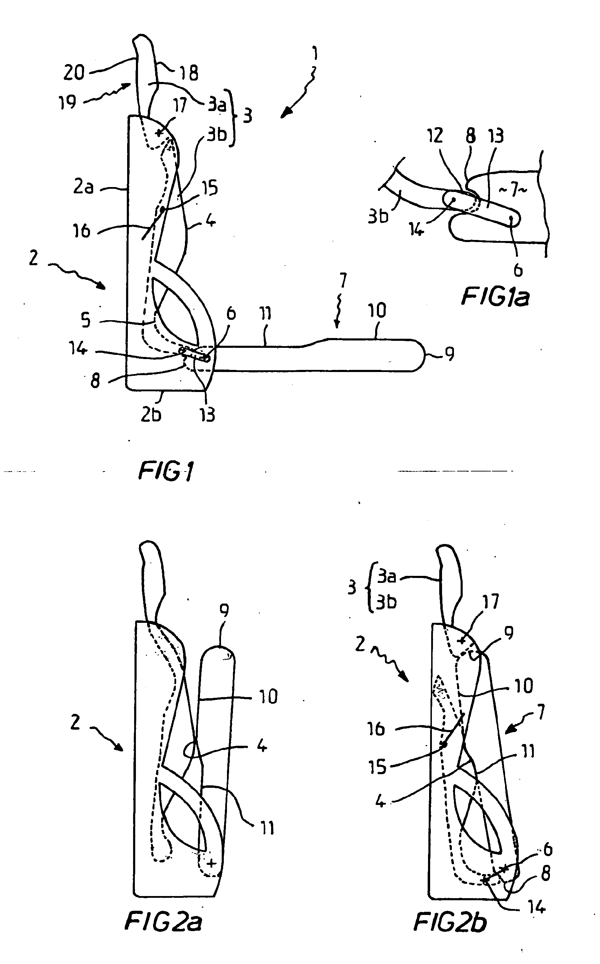

La figure 1 représente un siège 1 à assise repliable. Ce siège 1 comporte une coque 2 grossièrement en équerre, ayant une partie sensiblement verticale 2a et une partie sensiblement horizontale 2b via lesquelles le siège peut être fixé, soit à une paroi verticale appartenant au véhicule, soit au sol du véhicule, soit aux deux. La partie sensiblement verticale 2a de la coque héberge le dossier 3 du siège, lequel est composé de deux parties indépendantes, à savoir, un élément 3a présentant un appui scapulaire et un élément 3b présentant un appui lombaire ayant sensiblement la forme d'un S (inversé sur les figures) dont la convexité supérieure 4 forme l'appui lombaire proprement dit et dont la concavité inférieure 5 ménage un espace pour la partie haute du fessier de l'usager lorsqu'il est assis sur le siège. La partie sensiblement horizontale 2b de la coque offre deux points d'ancrage pour un axe de rotation 6 autour duquel est susceptible de pivoter une assise 7. L'assise 7 comporte un bord proximal 8 au voisinage de l'axe de rotation 6 et un bord distal 9 à l'opposé. Côté distal, l'assise présente une zone en plateau 10 et, côté proximal, une zone en creux 11, ou fosse, adaptée à accueillir les ischions de l'usager en lui offrant un meilleur confort.

On comprend qu'en l'absence de moyens spécialement conçus pour réduire l'encombrement d'un siège qui aurait, approximativement, la configuration ouverte décrite ci-dessus, le siège aurait, en position fermée, la configuration illustrée à la figure 2a : le plateau distal 10 de l'assise viendrait en butée contre l'appui lombaire 4, de sorte que l'épaisseur du siège replié correspondrait à la somme de l'épaisseur de la coque garnie du dossier, au niveau de la plus grande épaisseur du dossier, et de l'épaisseur de l'assise au niveau de plus grande épaisseur de celle-ci. En outre, la face envers de l'assise serait sensiblement verticale, de sorte que l'épaisseur du siège à l'état replié serait sensiblement la même sur toute la hauteur de la coque 2.

Le siège selon l'invention comporte cependant une combinaison de moyens pour réduire cet encombrement.

Comme il ressort mieux de la figure 1a, le bord proximal 8 de l'assise et le bord inférieur 12 de l'élément 3b présentent des zones de contour complémentaires et emboîtées, maintenues en contact par un levier 13 qui est monté entre l'axe de rotation 6 et un axe 14 dépendant de l'élément 3b.

Par ailleurs, dans son tiers supérieur, l'élément 3b présente deux ergots latéraux 15 qui sont, chacun, en prise avec une glissière 16 ménagée dans les faces latérales de la coque 2.

Grâce à ces moyens, lorsque l'assise 7 est relevée vers sa position fermée, par exemple sous l'effet d'un ressort de rappel sollicitant l'assise vers sa position fermée, l'axe de rotation 6 tourne en entraînant en rotation le levier 13, lequel contraint l'extrémité 12 de l'élément 3b, et donc tout l'élément 3b, à un mouvement d'abaissement. Ce faisant, la partie supérieure de l'élément 3b est contrainte à un mouvement de recul vers la paroi verticale de la coque, du fait du guidage des ergots 15 par les glissières 16 avec pour résultat que le bord supérieur de l'élément 3b s'écarte de l'élément 3a et que la convexité de l'appui lombaire 4 s'abaisse par rapport à la position qu'elle aurait en l'absence des moyens de l'invention. Il s'ensuit que le bord distal 9 de l'assise peut venir se loger sous l'élément 3a et que la convexité de l'appui lombaire 4 ne se trouve plus située en vis-à-vis du plateau distal 10 de l'assise (figure 2a) mais en vis-à-vis de la fosse ischiatique 11 dans laquelle elle s'emboîte (figure 2b). La comparaison des figures 2a et 2b montre clairement la réduction d'encombrement obtenue. Comme on le voit, en position fermée, à l'élément 3a près, le siège selon l'invention est inscrit dans les limites de la coque 2, l'appui lombaire 4 ayant reculé le plus possible dans ces limites. Outre la réduction d'encombrement, cette configuration évite que l'usager puisse s'asseoir sur le bord distal 9 de l'assise en faisant peser son poids sur des organes qui ne sont pas conçus pour ce faire, mais permet néanmoins à l'usager de s'adosser au siège.

L'élément 3a est monté pivotant en 17 sur la coque 2. Il offre une face 18 formant appui scapulaire exposée lorsque l'élément est en position relevée, représentée aux figures 1 et 2, et une face opposée 19 présentant une fosse ischiatique 20 exposée en position rabattue, non représentée. Cette position rabattue, utilisable lorsque l'assise 7 est repliée, transforme l'élément 3a en miséricorde permettant à l'usager de s'appuyer en position assis-debout. L'élément 3a est de préférence soumis à un ressort de rappel le sollicitant vers sa position relevée.

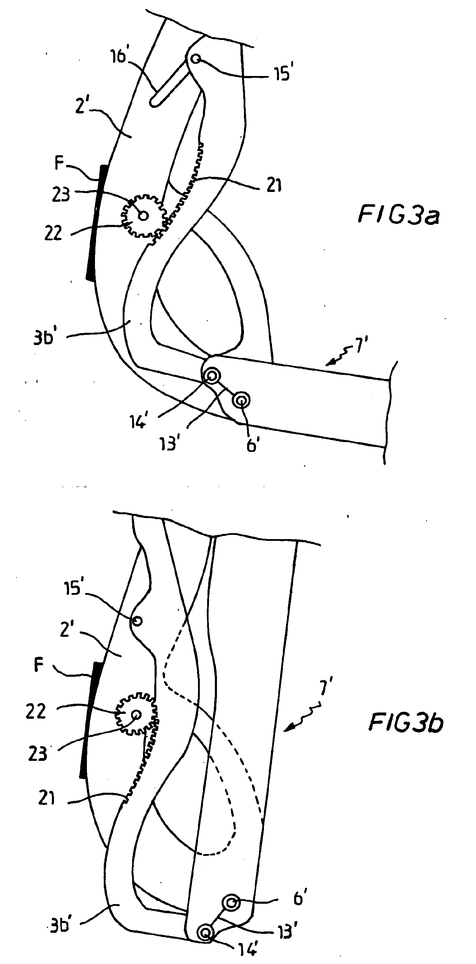

Pour éviter que les usagers ouvrent les sièges repliables aux heures d'affluence, l'invention prévoit la possibilité pour le conducteur de les bloquer en position fermée, ce qui peut être fait soit au moyen d'un dispositif débrayable du type mâchoire agissant sur l'axe de rotation 6 de l'assise pour l'empêcher de tourner, l'assise ayant été préalablement refermée sous l'effet d'un ressort de rappel, soit - et c'est ce qui est illustré dans les figures 3a et 3b - en agissant sur l'élément 3b, auquel cas c'est l'assise 7 qui est refermée par abaissement de l'élément 3b.

Aux figures 3a et 3b, les éléments semblables à ceux des figures 1 et 2b sont désignés par les mêmes références, mais accompagnées du signe prime et F désigne une plaque de fixation à une paroi dépendant du véhicule.

Comme il ressort des figures 3a et 3b, il est prévu, sur l'élément 3b' une crémaillère 21 avec laquelle vient en prise une roue crantée 22, calée sur un axe de rotation 23 monté sur la coque 2' et commandé par un moteur non représenté. Des moyens classiques contraignent la crémaillère 21 à rester appuyée contre la roue crantée 22. La rotation de l'axe 23 entraîne celle de la roue crantée 22 qui parcourt la crémaillère 21 dans un sens ou dans l'autre selon le sens de rotation du moteur et, comme la position de l'axe 23 est fixe par rapport à la coque 2', l'élément 3b' qui se trouve contraint de rester appuyé contre la roue crantée 22 doit soit s'abaisser en reculant vers la coque (refermant du même coup l'assise en faisant passer l'axe 14' au dessous de l'axe 6' et en agissant sur l'axe de rotation 6' via le levier 13') soit se relever en se projetant vers l'avant (ouvrant du même coup l'assise 7' en faisant passer l'axe 14' au-dessus de l'axe 6' et en agissant sur l'axe de rotation 6' via le levier 13').

La manoeuvre de l'assise de sa position ouverte à sa position fermée suppose que l'assise 7' n'est pas soumise à un moyen de rappel vers sa position fermée. Le siège aura donc deux positions stables commandées par le conducteur : une position de condamnation en position fermée, pour les heures de pointe, et une position ouverte donnant au véhicule un aspect plus accueillant aux heures creuses.

En variante, l'assise peut être soumise à un moyen de rappel vers sa position fermée et des moyens peuvent être prévus pour la bloquer en cette position fermée. A cette fin, le siège peut incorporer un organe approprié qui se projette ou se rétracte, par exemple sous l'action d'un électro-aimant, et qui vient "crocheter" ou pas l'élément 3b' en position fermée.

L'invention n'est pas limitée aux formes d'exécution décrites et représentées. En particulier, le levier 13 ou 13' pourrait être remplacé par un ressort, ce qui aurait l'avantage de réaliser un certain amortissement et de réduire les bruits de fonctionnement. En variante, une partie de l'assise 7 ou 7' elle-même pourrait remplir le rôle du levier.

En outre, l'appui scapulaire pourrait être surmonté d'un appui-tête.

Par ailleurs, bien que l'on se soit référé à l'application des sièges dans des véhicules de transport en commun, il est bien entendu que les sièges peuvent trouver une utilisation dans d'autres contextes, par exemple dans des salles de spectacles, la position repliée facilitant la circulation entre les rangs et les opérations de nettoyage du sol.

## Revendications

1. Siège (1) à assise repliable (7, 7') du type comportant une coque (2, 2') adaptée à être solidarisée à une structure fixe, ladite coque (2, 2') étant équipée d'un dossier (3) et offrant des points de montage pour l'axe de rotation (6, 6') d'une assise pivotante (7), laquelle comporte un bord proximal (8), proche dudit axe de rotation (6), et un dossier (3) (9) opposé,
ledit dossier (3) présentant un appui scapulaire et un appui lombaire réalisés chacun sur un élément indépendant (3a ; 3b, 3b') du dossier (3) ; **caractérisé en ce que**
l'élément (3b, 3b') présentant l'appui lombaire est monté coulissant sur ladite coque (2, 2') ; et
l'élément (3b, 3b') présentant l'appui lombaire est asservi aux mouvements d'ouverture et de fermeture de l'assise (7, 7'), ou inversement, selon une relation telle que, en position fermée de l'assise (7, 7'), le bord distal (9) de l'assise (7, 7') vient se loger sous ledit appui scapulaire (3a).

2. Siège (1) selon la revendication 1, **caractérisé en ce que** ledit asservissement est réalisé sous la forme d'un emboîtement entre une zone de contour de l'assise (7, 7') et une zone de contour de l'élément (3b, 3b') présentant l'appui lombaire, une partie formant levier (13, 13'), solidaire, d'une part, de l'axe de rotation (6, 6') de l'assise (7, 7') et, d'autre part, d'un point d'ancrage (14, 14') prévu sur l'élément (3b, 3b') présentant l'appui lombaire interdisant le déboîtement.

3. Siège (1) selon la revendication 1 ou 2, dans lequel ladite assise (7, 7') présente une fosse ischiatique (11), **caractérisé en ce que**, en position fermée de l'assise, ledit appui lombaire vient se loger dans ladite fosse ischiatique (11).

4. Siège (1) selon la revendication 1, 2 ou 3, **caractérisé en ce que** l'élément présentant (3b, 3b') l'appui lombaire est muni d'ergots latéraux (15, 15') qui coopèrent chacun avec une glissière (16, 16') dépendant de ladite coque (2, 2'), la géométrie et l'orientation desdites glissières (16, 16') étant telles qu'elles contraignent ledit élément (3b, 3b') présentant l'appui lombaire à passer d'une position relevée, saillante, en position ouverte de l'assise (7, 7') à une position abaissée, reculée, en position fermée de l'assise (7, 7').

5. Siège (1) selon la revendication 2, 3 ou 4, **caractérisé en ce que**, en position ouverte de l'assise (7, 7'), ledit point d'ancrage (14, 14') de la partie formant levier (13, 13') sur l'élément (3b, 3b') présentant l'appui lombaire est situé plus haut que l'axe de rotation (6, 6') de l'assise (7, 7') alors que, en position fermée de l'assise (7, 7'), ce point d'ancrage (14, 14') est situé plus bas que ledit axe de rotation (6, 6').

6. Siège (1) selon l'une quelconque des revendications 1 à 5, **caractérisé en ce que** l'élément (3b, 3b') formant appui lombaire est grossièrement en forme de S, la convexité supérieure du S formant l'appui proprement dit et la concavité inférieure du S offrant un espace propre à recevoir la partie haute du fessier de l'usager, en position ouverte de l'assise (7, 7').

7. Siège (1) selon l'une quelconque des revendications 2 à 6, **caractérisé en ce que** ladite partie formant levier (13, 13') a une longueur inférieure à 13 cm.

8. Siège (1) selon la revendication 7, **caractérisé en ce que** ladite partie formant levier (13, 13') a une longueur comprise entre 4 et 8 cm.

9. Siège (1) selon l'une quelconque des revendications 1 à 8, **caractérisé en ce qu'**il comporte des moyens motorisés actionnables à distance agissant, directement ou indirectement, sur l'assise (7') et/ou l'élément (3b') présentant l'appui lombaire.

10. Siège selon la revendication 9, **caractérisé en ce qu'**il comporte des moyens motorisés agissant sur l'élément (3b') présentant l'appui lombaire et revêtant la forme d'une roue crantée (22) calée sur un axe de rotation (23) entraîné par un moteur et monté sur ladite coque (2'), ladite roue crantée (22) engrenant avec une crémaillère (21) dépendant dudit élément (3b').

11. Siège (1) selon la revendication 9, dont l'assise (7) est munie de moyens de rappel la sollicitant vers sa position fermée, **caractérisé en ce que** lesdits moyens motorisés sont adaptés à exercer une prise relâchable bloquant l'assise (7) en position fermée.

12. Siège (1) selon l'une quelconque des revendications 1 à 11, **caractérisé en ce que** le plan de l'assise (7, 7') est légèrement incliné vers le bas, de son bord proximal (8), par rapport au dossier (3), vers son bord distal (9).

## Claims

1. Seat (1) with folding cushion (7, 7') of the type comprising a shell (2, 2') suitable for being attached to a fixed structure, said shell (2, 2') being equipped with a backrest (3) and providing mounting points for the pivot pin (6, 6') of a pivoting cushion (7), which comprises a proximal edge (8) adjacent to said pivot pin (6) and an opposing distal edge (9), said backrest (3) having a shoulder support and a lumbar support each formed on an element (3a; 3b, 3b') separate from the backrest (3),
**characterized in that**:
- the element (3b, 3b') having the lumbar support is slidably mounted on said shell (2, 2')'; and
- the element (3b, 3b') having the lumbar support is automatically controlled by the opening and closing movements of the cushion (7, 7') or, vice versa, in a relationship such that, in the closed position of the cushion (7, 7'), the distal edge (9) of the cushion (7, 7') is housed below said shoulder support (3a).

2. Seat (1) according to Claim 1, **characterized in that** said automatic control is effected by a contour area of the cushion (7, 7') interlocking with a contour area of the element (3b, 3b') having the lumbar support, one part forming a lever (13, 13'), attached, on the one hand, to the pivot pin (6, 6') of the cushion (7, 7') and, on the other hand, to an anchoring point (14, 14') provided on the element (3b, 3b') having the lumbar support, which prevents disengagement.

3. Seat (1) according to Claim 1 or 2, in which said cushion (7, 7') has an ischial recess (11), **characterized in that**, in the closed position of the cushion, said lumbar support is housed in said ischial recess (11).

4. Seat (1) according to Claim 1, 2 or 3, **characterized in that** the element (3b, 3b') having the lumbar support is provided with lateral lugs (15, 15') which each cooperate with a slide (16, 16') integral to said shell (2, 2'), the geometry and orientation of said slides (16, 16') being such that they force said element (3b, 3b') having the lumbar support to pass from a raised, projecting position in the open position of the cushion (7, 7') to a lowered, retracted position in the closed position of the cushion (7, 7').

5. Seat (1) according to Claim 2, 3 or 4, **characterized in that** in the open position of the cushion (7, 7') said anchoring point (14, 14') of the part forming the lever (13, 13') on the element (3b, 3b') having the lumbar support is located higher than the pivot pin (6, 6') of the cushion (7, 7'), whilst in the closed position of the cushion (7, 7'), this anchoring point (14, 14') is located lower than said pivot pin (6, 6').

6. Seat (1) according to any one of Claims 1 to 5, **characterized in that** the element (3b, 3b') forming the lumbar support is approximately S-shaped, the upper convexity of the S-shape forming the actual support and the lower concavity of the S-shape providing a space capable of receiving the upper part of the buttocks of the user, in the open position of the cushion (7, 7').

7. Seat (1) according to any one of Claims 2 to 6, **characterized in that** the length of said part forming the lever (13, 13') is less than 13 cm.

8. Seat (1) according to Claim 7, **characterized in that** the length of said part forming the lever (13, 13') is between 4 and 8 cm.

9. Seat (1) according to any one of Claims 1 to 8, **characterized in that** it comprises motorized means which may be remotely actuated, acting directly or indirectly on the cushion (7') and/or the element (3b') having the lumbar support.

10. Seat according to Claim 9, **characterized in that** it comprises motorized means acting on the element (3b') having the lumbar support and assuming the shape of a notched wheel (22) fixed on a pivot pin (23) driven by a motor and mounted on said shell (2'), said notched wheel (22) engaging with a rack (21) integral to said element (3b').

11. Seat (1) according to Claim 9, of which the cushion (7) is provided with return means urging said cushion into its closed position, **characterized in that** said motorized means are appropriate for exerting a releasable hold, locking the cushion (7) in the closed position.

12. Seat (1) according to any one of Claims 1 to 11, **characterized in that**, relative to the backrest (3), the plane of the cushion (7, 7') is slightly inclined downwards from its proximal edge (8) towards its distal edge (9).

## Patentansprüche

1. Sitz (1) mit aufklappbarer Sitzfläche (7, 7'), umfassend eine Schale (2, 2'), die dafür ausgelegt ist, mit einer feststehenden Struktur fest verbunden zu werden, wobei die Schale (2, 2') mit einer Rückenlehne (3) versehen ist und Montagepunkte für die Drehachse (6, 6') einer verschwenkbaren Sitzfläche (7) bietet, die einen proximalen Rand (8) nahe dieser Drehachse (6) und einen entgegengesetzten distalen Rand (9) umfasst, wobei die Rückenlehne (3) eine Schulterstütze und eine Lumbalstütze aufweist, die jeweils auf einem unabhängigen Element (3a; 3b, 3b') der Rückenlehne (3) gebildet sind, **dadurch gekennzeichnet, dass** das die Lumbalstütze aufweisende Element (3b, 3b') auf der Schale (2, 2') verschiebbar montiert ist und das die Lumbalstütze aufweisende Element (3b, 3b') durch die Öffnungs- und Schließbewegungen der Sitzfläche (7, 7') oder umgekehrt in einer solchen Beziehung gesteuert wird, dass der distale Rand (9) der Sitzfläche (7, 7') in geschlossener Stellung der Sitzfläche (7, 7') unter die Schulterstütze (3a) tritt.

2. Sitz (1) nach Anspruch 1, **dadurch gekennzeichnet, dass** diese Steuerung in der Form eines Ineinandergreifens zwischen einer Umrisszone der Sitzfläche (7, 7') und einer Umrisszone des die Lumbalstütze aufweisenden Elements (3b, 3b') ausgeführt ist, wobei ein einen Hebel (13, 13') bildender Teil, der einerseits mit der Drehachse (6, 6') der Sitzfläche (7, 7') und andererseits mit einem Verankerungspunkt (14, 14'), der auf dem die Lumbalstütze aufweisenden Element (3b, 3b') vorgesehen ist, fest verbunden ist, das Aus-dem-Eingriff-Kommen sperrt.

3. Sitz (1) nach Anspruch 1 oder 2, bei dem die Sitzfläche (7, 7') einen Gesäbgraben (11) aufweist, **dadurch gekennzeichnet, dass** die Lumbalstütze in geschlossener Stellung der Sitzfläche in diesen Gesäßgraben (11) eintritt.

4. Sitz (1) nach Anspruch 1, 2 oder 3, **dadurch gekennzeichnet, dass** das die Lumbalstütze aufweisende Element (3b, 3b') mit seitlichen Vorsprüngen (15, 15') versehen ist, die jeweils mit einer von der Schale (2, 2') abhängenden Gleitführung (16, 16') zusammenwirken, wobei die Geometrie und die Ausrichtung der Gleitführungen (16, 16') so beschaffen sind, dass sie das die Lumbalstütze aufweisende Element (3b, 3b') zwingen, von einer angehobenen, vorspringenden Stellung in offener Stellung der Sitzfläche (7, 7') in eine abgesenkte, eingezogene Stellung in geschlossener Stellung der Sitzfläche (7, 7') überzugehen.

5. Sitz (1) nach Anspruch 2, 3 oder 4, **dadurch gekennzeichnet, dass** der verankerungspunkt (14, 14') des einen Hebel (13, 13') bildenden Teils an dem die Lumbalstütze aufweisenden Element (3b, 3b') in offener Stellung der sitzfläche (7, 7') höher gelegen ist als die Drehachse (6, 6') der Sitzfläche (7, 7'), während dieser Verankerungspunkt (14, 14') in geschlossener Stellung der Sitzfläche (7, 7') tiefer als die Drehachse (6, 6') gelegen ist.

6. Sitz (1) nach einem der Ansprüche 1 bis 5, **dadurch gekennzeichnet, dass** das die Lumbalstütze bildende Element (3b, 3b') grob S-förmig ist, wobei die obere Konkavität des S die eigentliche Stütze bildet und die untere Konkavität des S einen Raum bietet, der geeignet ist, in offener Stellung der Sitzfläche (7, 7') den oberen Teil des Gesäßes des Benutzers aufzunehmen.

7. Sitz (1) nach einem der Ansprüche 2 bis 6, **dadurch gekennzeichnet, dass** der einen Hebel bildende Teil (13, 13') eine Länge von weniger als 13 cm hat.

8. Sitz (1) nach Anspruch 7, **dadurch gekennzeichnet, dass** der einen Hebel (13, 13') bildende Teil eine Länge zwischen 4 und 8 cm besitzt.

9. Sitz (1) nach einem der Ansprüche 1 bis 8, **dadurch gekennzeichnet, dass** er fernbedienbare motorbetriebene Mittel umfasst, die direkt oder indirekt auf die Sitzfläche (7') und/oder das die Lumbalstütze aufweisende Element (3b') einwirken.

10. Sitz nach Anspruch 9, **dadurch gekennzeichnet, dass** er motorbetriebene Mittel umfasst, die auf das die Lumbalstütze aufweisende Element (3b') einwirken und die Form eines Zahnrads (22) aufweisen, das auf einer Drehachse (23) verkeilt ist, die von einem Motor angetrieben wird und auf der Schale (2') montiert ist, wobei das Zahnrad (22) mit einer von diesem Element (3b') abhängigen Zahnstange (21) in Eingriff steht.

11. Sitz (1) nach Anspruch 9, dessen Sitzfläche (7) mit Rückstellmitteln versehen ist, die sie auf ihre geschlossene Stellung zu beaufschlagen, **dadurch gekennzeichnet, dass** die motorbetriebenen Mittel dafür ausgelegt sind, einen freigebbaren Eingriff auszuüben, der die sitzfläche (7) in geschlossener Stellung blockiert.

12. Sitz (1) nach einem der Ansprüche 1 bis 11, **dadurch gekennzeichnet, dass** die Ebene der Sitzfläche (7, 7') von ihrem proximalen Rand (8) bezüglich der Rückenlehne (3) auf ihren distalen Rand (9) zu leicht nach unten geneigt ist.
